# EUROPEAN PATENT APPLICATION

(11) **EP 4 808 143 A1**
(43) Date of publication of application: **16.09.2026**
(21) Application number: 26163473.7
(22) Date of filing: 10.03.2026
(51) Int. Cl.: H04N 25/589, H04N 25/616

(54) **IMAGE CAPTURING APPARATUS AND CONTROL METHOD THEREFOR, PROGRAM, AND STORAGE MEDIUM**

(30) Priority: 11.03.2025 JP 2025038547
(71) Applicant: Canon Kabushiki Kaisha, Tokyo 146-8501 (JP)
(72) Inventor: NAKAMURA, Koki, Ohta-ku, Tokyo, 146-8501 (JP)
(74) Representative: TBK

(57) **Abstract**

An image capturing apparatus includes an image sensor including a plurality of pixels arrayed in a matrix, composition processing means for causing each pixel of the image sensor to perform first image capturing with a first exposure time and second image capturing with a second exposure time, and performing composition processing of composing a first image signal and a second image signal, and image processing means for performing debayer processing on a composite image signal, wherein the composition processing, it acquires a first composition ratio, and a second composition ratio, further acquires a third composition ratio, which is intermediate between the first composition ratio and the second composition ratio, and the image processing means for performing the debayer processing on an image signal in the pixel range of interest.

## Description

### TECHNICAL FIELD

The present disclosure relates to an image capturing apparatus that generates a high dynamic range (HDR) image.

### BACKGROUND

As what is called a CMOS sensor, there is a known global shutter (hereinafter referred to as GS) sensor that enables GS by providing each pixel with a memory unit.

Each pixel of this GS sensor includes a gate that transfers the signal electric charge accumulated in a photoelectric conversion portion to a charge accumulation portion. In the GS sensor, basically, all pixels simultaneously transfer the electric charges from the photoelectric conversion portion to the charge accumulation portion, whereby the timings of start and end of signal accumulation in the photoelectric conversion portion are the same in all pixels, and the GS function is implemented.

There is also a known GS sensor configured to include a plurality of charge accumulation portions for one photoelectric conversion portion, transfer signal electric charges to each charge accumulation portion a plurality of times in one frame, and acquire a plurality of images in which the total accumulation time of the signal electric charges transferred to each charge accumulation portion is changed. By changing the accumulation time, images having different dynamic ranges are acquired, and by composing the images, one image having a wide dynamic range can be generated. US-2013-0135486 and U.S. Patent No. 9118883 disclose the configuration of such a GS sensor.

### SUMMARY

In a case where one image with a high dynamic range is generated using two images with different sensitivities by changing the accumulation time, there is a case where light is not uniformly incident within the accumulation time due to the influence of the blinking cycle of the subject light source such as an LED, for example, and an ideal sensitivity difference is not obtained. If an ideal sensitivity difference is not obtained, the RGB ratio collapses when two images are composed, and coloring occurs, and therefore, coloring is eliminated by composing pixels in 1 unit arranged in a Bayer array pattern at the same composition ratio.

The image signals in the Bayer format arranged in the Bayer array are generally output from the image capturing apparatus in a state of having been subjected to debayer processing.

However, in the debayer processing, in a case where RGGB pixels arranged in the Bayer array are processed as pixels of interest, the processing is performed with reference to pixels in another surrounding Bayer range. For that reason, if the pixel signals in the Bayer array in the reference pixel range are composed at different composition ratios, there is a problem that an error occurs in the debayer processing result.

The present disclosure has been made in view of the above-described problems, and provides an image capturing apparatus that can reduce an error in debayer processing in a case of generating a high dynamic range (HDR) image.

The present disclosure in its first aspect provides an image capturing apparatus as specified in claim 1. Optional features are specified in claims 2 to 8.

The present disclosure in its second aspect provides a control method for an image capturing apparatus as specified in claim 9.

The present disclosure in its third aspect provides a program as specified in claim 10.

The present disclosure in its fourth aspect provides a computer-readable storage medium as specified in claim 11.

Features of the present disclosure will become apparent from the following description of embodiments with reference to the attached drawings. The following description of embodiments is described by way of example.

### BRIEF DESCRIPTION OF THE DRAWINGS

The accompanying drawings, which are incorporated in and constitute a part of the specification, illustrate embodiments of the present disclosure, and together with the description, serve to explain the principles of the embodiments.
FIG. 1 is a block diagram of an image sensor in a first embodiment.
FIG. 2 is a circuit diagram of a pixel in the first embodiment.
FIG. 3 is a timing chart of a pixel circuit in the first embodiment.
FIG. 4 is a timing chart of the pixel circuit in the first embodiment.
FIG. 5 is an explanatory view of dynamic range expansion composition processing in the first embodiment.
FIG. 6 is a view illustrating a pixel portion of the image sensor in the first embodiment.
FIG. 7 is a configuration diagram of an image capturing apparatus in the first embodiment.
FIG. 8 is a flowchart showing an example of an operation in the first embodiment.
FIG. 9 is an explanatory view of a pixel range of interest and a reference pixel range in the first embodiment.
FIGS. 10A and 10B are flowcharts showing an example of an operation in a second embodiment.
FIGS. 11A to 11E are explanatory views of a pixel range of interest and a reference pixel range in the second embodiment.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

### First Embodiment

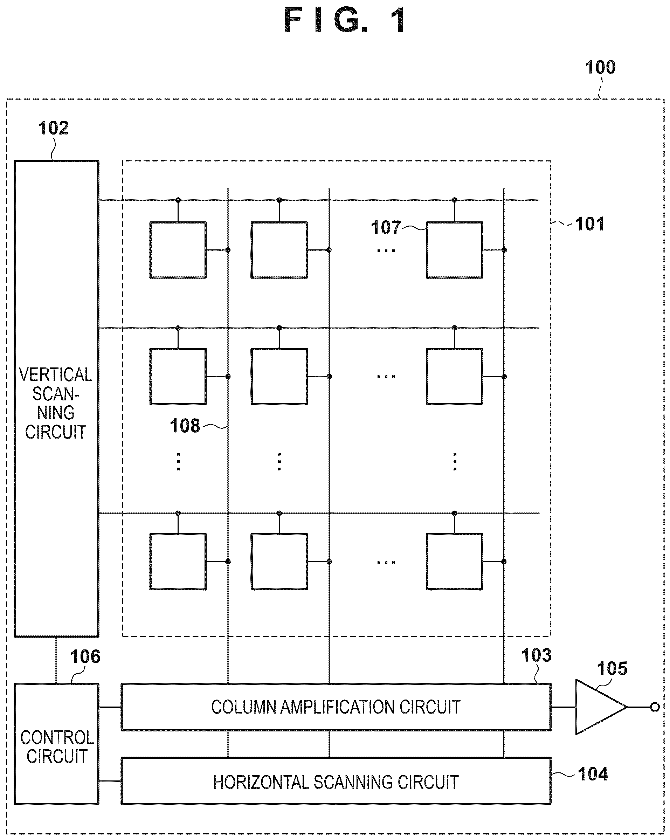

FIG. 1 is a block diagram illustrating a schematic configuration of an image sensor used in an image capturing apparatus of the first embodiment of the present disclosure.

An image sensor 100 includes a pixel portion 101, a vertical scanning circuit 102, a column amplification circuit 103, a horizontal scanning circuit 104, an output circuit 105, and a control circuit 106. In plan view of a substrate, the pixel portion 101 is a pixel array including a plurality of pixels 107 arranged two-dimensionally (in a matrix) including a plurality of rows and a plurality of columns. The vertical scanning circuit 102 supplies a control signal to a plurality of transistors included in the pixels 107, and controls on (conductive state) or off (non-conductive state) of these transistors.

Each column of the pixels 107 is provided with a signal line 108, and signals from the pixels 107 are read out to the signal line 108 for each column. The column amplification circuit 103 amplifies the pixel signals output to the signal line 108, and performs processing such as correlated double sampling processing based on signals at the time of resetting the pixels 107 and signals at the time of photoelectric conversion. The horizontal scanning circuit 104 supplies a control signal to a switch connected to an amplifier of the column amplification circuit 103, and controls the switch to turn it on or off.

The control circuit 106 controls the vertical scanning circuit 102, the column amplification circuit 103, and the horizontal scanning circuit 104. The output circuit 105 includes a buffer amplifier and a differential amplifier, and outputs, to a signal processing unit outside the image sensor, the pixel signals from the column amplification circuit 103. Note that by further providing the image sensor 100 with an AD conversion unit, the image sensor 100 may be configured to output digital pixel signals.

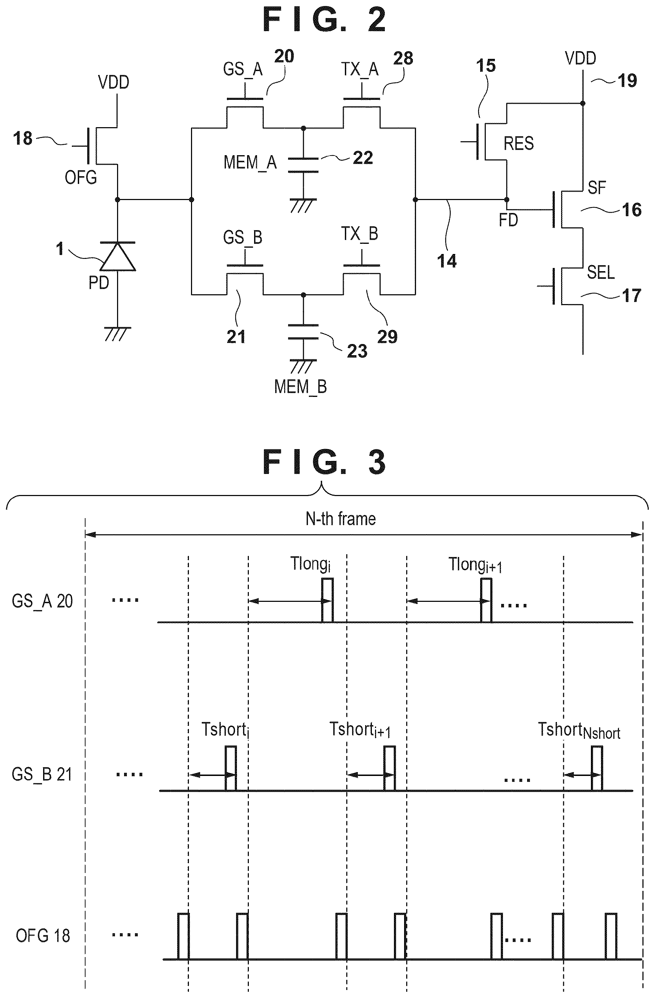

FIG. 2 is an equivalent circuit diagram of a unit pixel of the image sensor.

PD1 indicates a photodiode as an example of the photoelectric conversion portion. GS_A 20 and GS_B 21 denote electric charge transfer portions. These are configured to be able to transfer the signal electric charge generated by the photoelectric conversion portion PD1 to the circuit element of the subsequent stage. MEM_A 22 and MEM_B 23 denote charge accumulation portions (charge holding portions). These are configured to be able to hold the signal electric charges generated by the photoelectric conversion portion PD1. When turned on, the electric charge transfer portion GS_A 20 transfers the signal electric charge generated by the photoelectric conversion portion PD1 to the charge accumulation portion MEM_A 22. When turned on, the electric charge transfer portion GS_B 21 transfers the signal electric charge generated by the photoelectric conversion portion PD1 to the charge accumulation portion MEM_B 23.

TX_A 28 and TX_B 29 denote transfer portions. Each of them is configured to be able to transfer the signal electric charge held in the charge accumulation portion of the preceding stage to the circuit element of the subsequent stage.

When turned on, the electric charge transfer portion TX_A 28 transfers the signal electric charge held in the charge accumulation portion MEM_A 22 to a floating diffusion portion (FD) 14. When turned on, the electric charge transfer portion TX_B 29 transfers the signal electric charge held in the charge accumulation portion MEM_B 23 to the FD 14.

SEL 17 denotes a selection portion. The selection portion is configured to be able to select each pixel and read out to the outside for each pixel or each pixel row. An OFG 18 is a charge discharging control unit that can discharge the charge in the photoelectric conversion portion PD1. For example, a MOS transistor can be used as the charge discharging control unit. In this case, the charge discharging control unit is configured such that a semiconductor region having the same polarity as the signal electric charge constituting a part of the photoelectric conversion portion serves as a source, and a semiconductor region (overflow drain region: OFD region) to which a power supply voltage VDD 19 is supplied serves as a drain. A MOS transistor can be used for each transfer portion, a reset portion, the selection portion, and the charge discharging control unit.

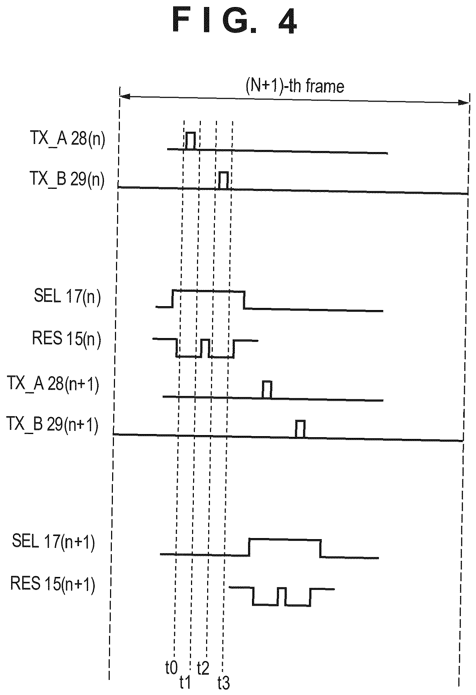

Next, a drive method in the present embodiment will be described with reference to FIGS. 3 and 4. FIG. 3 is a view illustrating a timing for drive related to exposure, and FIG. 4 is a view illustrating a timing for drive related to readout. The subscript n denotes the row number of the pixel. The subscripts of the respective control lines indicate the n-th row and the (n + 1)-th row. Two rows will be described here, but also a case of further including a plurality of rows can be handled by repeating this drive pattern. Since the image sensor is a global shutter type, the drive timing is the same for all rows regarding the drive related to exposure. Therefore, subscripts and notations for a plurality of lines are not performed. An example of active-high is illustrated.

Tshorti in FIG. 3 indicates the accumulation time of the signal electric charge of the i-th time of the charge transfer repeated a plurality of times, for example, Nshort times in the N-th frame. This accumulation time corresponds to a time from when the charge discharging control unit OFG 18 is turned on and the photoelectric conversion portion PD1 is reset to when the transfer portion GS_B 21 is turned on, the generated signal electric charge is transferred from the photoelectric conversion portion PD1 to the charge accumulation portion MEM_B 23, and the transfer portion GS_B 21 is turned off. The accumulation time Tshort of the signal electric charge accumulated in the charge accumulation portion MEM_B 23 can be said to be a time in which Tshorti is added from i = 1 to i = Nshort.

Tlongi in FIG. 3 indicates the accumulation time of the signal electric charge of the i-th time of the charge transfer repeated a plurality of times, for example, Nlong times in the N-th frame. This accumulation time corresponds to a time from when the charge discharging control unit OFG 18 is turned on and the photoelectric conversion portion PD1 is reset to when the transfer portion GS_A 20 is turned on, the generated signal electric charge is transferred from the photoelectric conversion portion PD1 to the charge accumulation portion MEM_A 22 and the transfer portion GS_A 20 is turned off. The accumulation time Tlong of the signal electric charge accumulated in the charge accumulation portion MEM_A 22 can be said to be a time in which Tlongi is added from i = 1 to i = Nlong.

Signal readout of the (N + 1)-th frame will be described with reference to FIG. 4. Here, readout of a signal electric charge acquired one frame before (N-th frame) and held in MEM_A 22 and MEM_B 23 is performed. The signal readout in the n-th row will be described in the form of sequentially reading out in rows.

SEL 17(n) is turned on so that the signal of the FD 14 of the pixel of the n-th row can be read out. RES 15(n) that resets the FD 14 when turned on is turned off, and a reset level voltage VRES of the FD 14 is read out (time t0). Next, TX_A 28(n) is turned on, the signal electric charge retained in MEM_A 22 is transferred to the FD 14, and a signal level VSIG of the FD 14 is read out (time t1). The difference between these two signal levels, |VSIG - VRES|, is a physical quantity proportional to the signal electric charge amount of MEM_A 22. RES15(n) is turned on again, the FD 14 is reset, and the reset level voltage VRES of the FD 14 is read out (time t2). Next, TX_B 29(n) is turned on, the signal electric charge retained in MEM_B 23 is transferred to the FD 14, and the signal level VSIG of the FD 14 is read out (time t3). The difference between these two signal levels, |VSIG - VRES|, is a physical quantity proportional to the signal electric charge amount of MEM_B 23. This is sequentially repeated for each row in all regions or a region desired to be acquired, and signals of MEM_A 22 and MEM_B 23 are acquired as images.

As described above, one photoelectric conversion portion PD1 includes two charge accumulation portions that accumulate signal electric charges to be transferred, and the respective accumulation times are controlled, whereby two images having different exposure times can be acquired. Then, by generating a composite image signal by composing these images, it is possible to acquire a high dynamic range image.

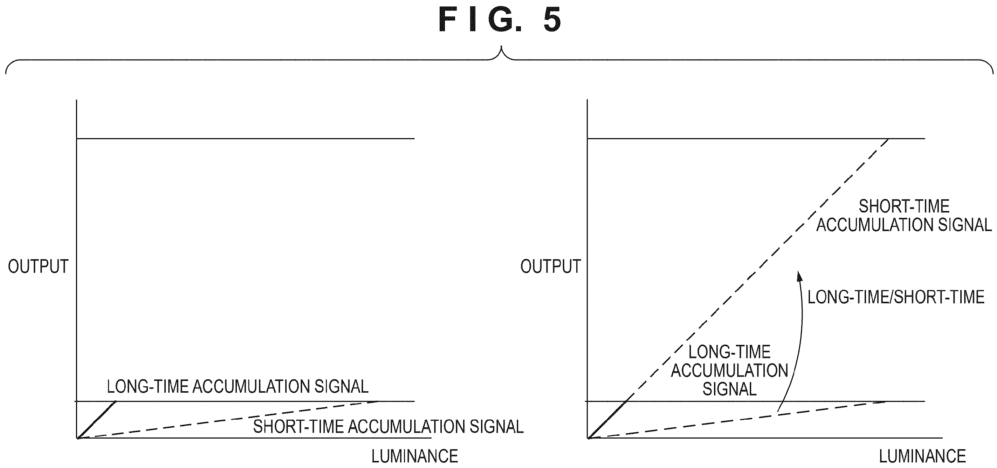

FIG. 5 is a view illustrating an outline of dynamic range expansion composition processing.

In the present embodiment, composition is performed by combining both image signals, as an example, by using an image signal acquired from a charge accumulation portion with a long accumulation time for an image at a normal luminance level, and using an image signal acquired from a charge accumulation portion with a short accumulation time for a high luminance part with a bright, whiteout level. In the composition processing, by using α blending (weighted addition) or the like, the image switching part of the image is smoothly connected so that it not noticeable.

Here, before performing the composition processing, it is necessary to match the luminance of the image with a short accumulation time to the luminance of the image with a long accumulation time. Since the respective accumulation times are known, theoretically correct composition processing can be performed by multiplying the image data acquired from the charge accumulation portion having the short accumulation time by the ratio of the accumulation times.

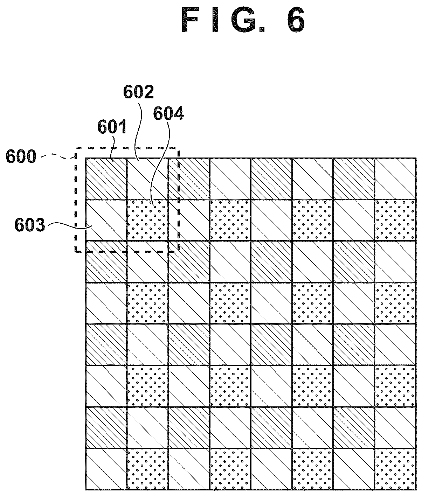

FIG. 6 is a view illustrating the pixel portion of the image sensor 100. Here, as an example, pixels arranged in a Bayer array are described.

601 denotes a color filter of R, 602 and 603 denote color filters of G, and 604 denotes a color filter of B. A short-time accumulation signal having a short accumulation time and a long-time accumulation signal having a long accumulation time are output from each pixel of each color filter. In a known manner, a composition ratio used at the time of α blending is calculated with 1 Bayer unit surrounded by a frame 600 as one block (minimum unit), and composition processing for dynamic range expansion is performed on image signals acquired from the 1 Bayer range all at the same composition ratio.

The composition processing has been described above, but the sensor need not have the GS function as long as the method performs composition from images having different exposure conditions.

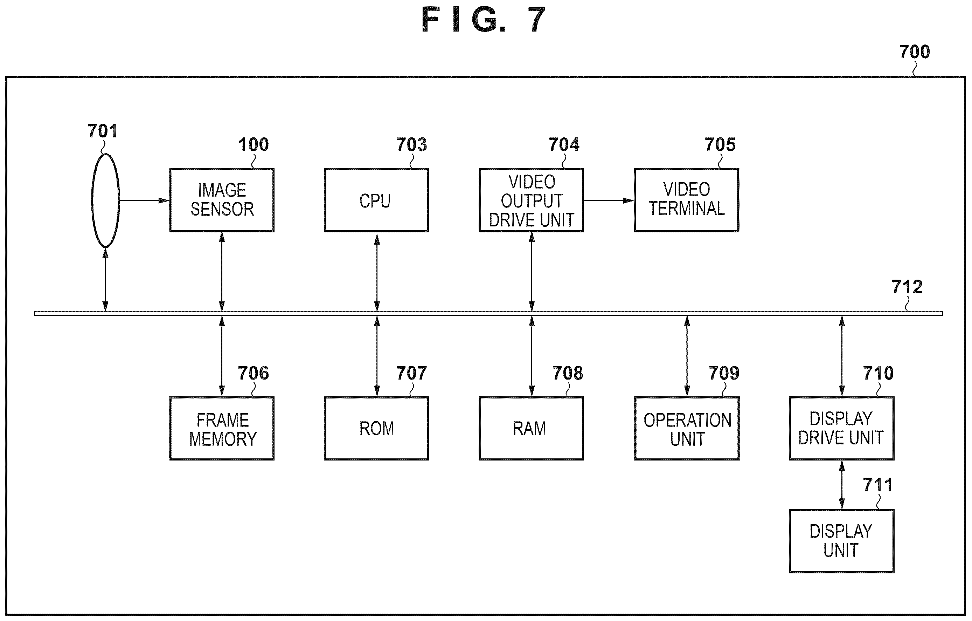

Next, a configuration of an image capturing apparatus 700 in the present embodiment will be described with reference to FIG. 7. In FIG. 7, an optical lens 701, the image sensor 100, a CPU 703, a video output drive unit 704, a frame memory 706, a ROM 707, a RAM 708, an operation unit 709, and a display drive unit 710 are connected to an internal bus 712. The units connected to the internal bus 712 can exchange data with one another via the internal bus 712.

The optical lens 701 is an optical element including a lens and a motor for driving the lens. The optical lens 701 operates based on a control signal, and can optically perform expansion or reduction of a video and perform adjustment of a focal length or the like. In a case of desiring to adjust the incident light quantity, it is possible to adjust the light quantity so as to obtain desired brightness by controlling the opening area of the diaphragm. The light transmitted through the lens 701 forms an image on the image sensor 100.

The image sensor 100 has the above-described configuration and plays a role of converting an optical signal into an electrical signal.

The CPU 703 functions as a central processing unit (CPU) for controlling each function of the image capturing apparatus 700. The CPU 703 performs, for example, control of image capturing setting of the image capturing apparatus 700 and various types of image processing such as the above-described composition processing for dynamic range expansion and debayer processing on the image output from the image sensor 100. Details of the order of the processing will be described later.

The video output drive unit 704 outputs the image subjected to image processing by the CPU 703 to the outside of the image capturing apparatus 700 via a video terminal 705.

The video terminal 705 is an interface that outputs a video that can be visually recognized by the user. Typical examples of the interface include a serial digital interface (SDI) and a high definition multimedia interface (HDMI) (registered trademark). In addition, there are various interfaces such as DisplayPort (registered trademark), and real-time video can be displayed on an external monitor or the like.

The frame memory 706 is generally called a random access memory (RAM), and is a memory element that can temporarily store an image signal and read out the image signal when necessary. Since an image signal has a huge amount of data, the frame memory 706 is required to have a high speed and a high capacity. In recent years, Dual Data Rate 4 - Synchronous Dynamic RAM (DDR4-SDRAM) or the like is often used. Use of this frame memory 706 enables various types of processing. The frame memory 706 is a memory element that is indispensable for performing image processing such as performing image processing using temporally different images or cutting out only a necessary region.

The ROM 707 is a nonvolatile memory element, and stores programs for operating the CPU 703, various adjustment parameters, and the like. The program read out from the ROM 707 is deployed in the volatile RAM 708 and executed. The RAM 708 having a lower speed and a lower capacity than those of the frame memory 706 is used in general.

The operation unit 709 is mainly used by the user to change the setting menu of the image capturing apparatus 700. The operation unit 709 may be operated from a physical interface such as a button, an analog key, or a switch, may be operated from an external device via a USB interface or the like, or may be operated using a WEB browser or the like via a network.

The display drive unit 710 displays the image subjected to the image processing by the CPU 703 on a display unit 711, which is a display device.

The display unit 711 is a display device that can be visually recognized by the user, and can display, for example, an image processed by the CPU 703, a setting menu, and the like, and enables the operation status of the image capturing apparatus 700 to be confirmed. As the display unit 711, in recent years, a small, low power consumption device such as a liquid crystal display (LCD) or an organic electroluminescence (EL) is used as a display device. Furthermore, a resistive film type or a capacitance type thin film device called a touch panel may also be provided together.

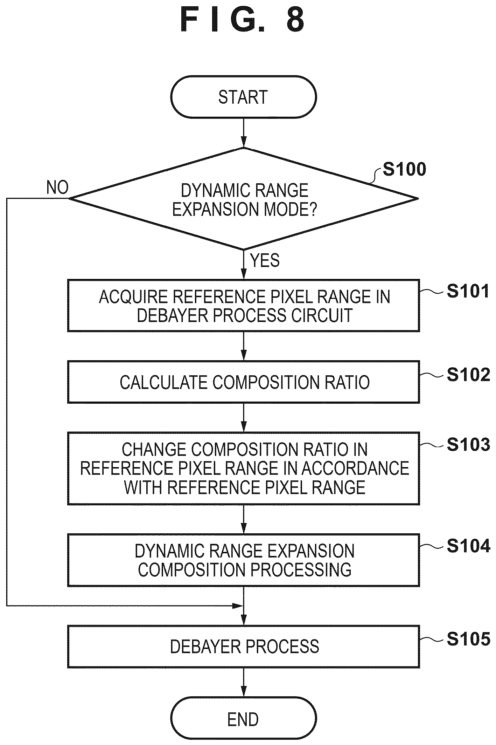

Next, dynamic range expansion composition processing and debayer processing to be performed by the image capturing apparatus 700 will be described with reference to FIG. 8. FIG. 8 is a flowchart showing an example of the operation of the first embodiment. The flowchart of FIG. 8 is started and repeatedly executed after the image capturing apparatus 700 is activated and acquires an image signal from the image sensor 100.

In the flowchart of FIG. 8, first, in step S100, the CPU 703 determines whether or not it is a dynamic range expansion mode for executing the dynamic range expansion composition processing. In a case of the dynamic range expansion mode, the process proceeds to step S101. In a case of not the dynamic range expansion mode, the process proceeds to step S105.

In step S101, the CPU 703 acquires the reference pixel range when the debayer processing is performed stored in the ROM 707.

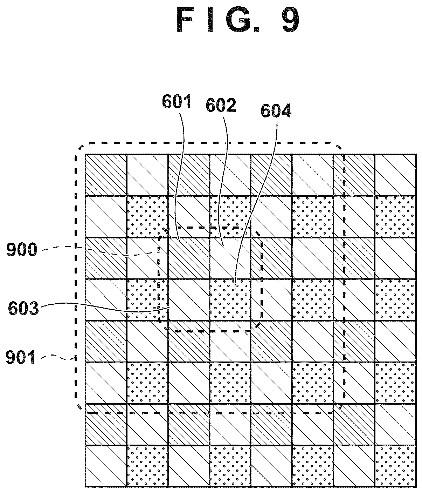

Here, the reference pixel range will be described with reference to FIG. 9. FIG. 9 is a view illustrating the pixel portion of the image sensor 100. When the pixel values of RGB are calculated by performing the debayer processing on a pixel range of interest 900 of 1 Bayer unit including the R color filter 601, the G color filter 602, the G color filter 603, and the B color filter 604, the pixel values of a reference pixel range 901 are weighted in accordance with the distance from the pixel range of interest 900 and calculated. In the present embodiment, the reference pixel range 901 is a square surrounding the pixel range of interest 900, but may have another shape such as a cross shape extending vertically and horizontally.

In step S102, the CPU 703 executes processing up to the calculation of the composition ratio of the dynamic range expansion composition processing described above.

In step S103, the CPU 703 changes the composition ratio of the pixel range of interest 900 and the composition ratio of the reference pixel range 901 calculated in step S102 to a mean value (intermediate value) of the composition ratio of the pixel range of interest 900 and the composition ratio of the reference pixel range 901. In the present embodiment, the mean value is calculated to change the composition ratios of the pixel range of interest 900 and the reference pixel range 901 to an identical value, but the composition ratio may be calculated using a two-dimensional filter depending on the position, and a rapid change in the composition ratio between adjacent Bayer units may be suppressed.

In step S104, the CPU 703 performs the dynamic range expansion composition processing on the pixel range of interest and the reference pixel range using the composition ratio changed in step S103.

In step S105, the CPU 703 performs the debayer processing on the pixel signals in the pixel range of interest 900 with reference to the pixel signals in the reference pixel range 901.

According to the operation of the flowchart of FIG. 8, it is possible to reduce an error in the debayer processing result by changing the composition ratio in accordance with the reference pixel range of the debayer processing circuit.

### Second Embodiment

Hereinafter, the second embodiment of the present disclosure will be described. In the first embodiment, a case where the debayer processing is performed with a fixed reference pixel range has been described. In a second embodiment of the present disclosure, a case of performing debayer processing by comparing pixel positions of peripheral pixels, determining a pixel position with high relevance, and changing the reference pixel range will be described.

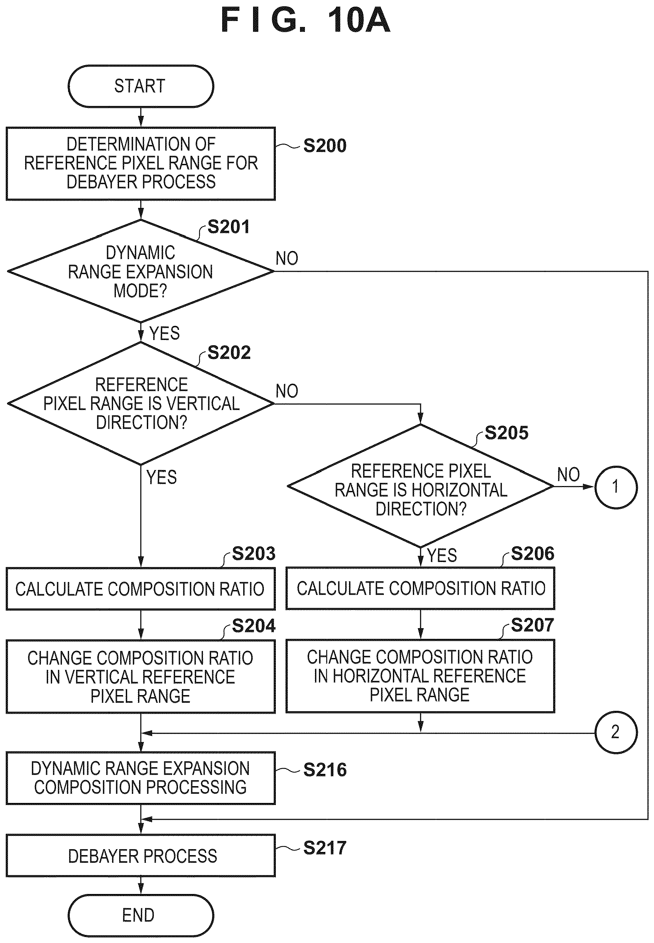

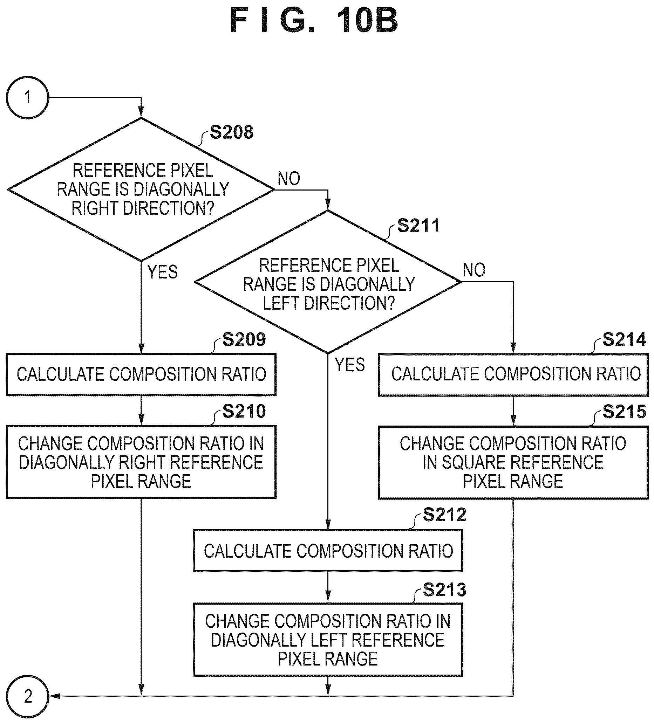

The operation of the second embodiment will be described with reference to FIGS. 10A and 10B. FIGS. 10A and 10B are flowcharts showing an example of the operation of the second embodiment. The configuration for implementing the second embodiment is similar to that of the image capturing apparatus 700 described in the first embodiment.

In step S200, the CPU 703 compares the pixel values of the peripheral pixels, determines the pixel position with high relevance, and determines the reference pixel range to be referred to in the debayer processing.

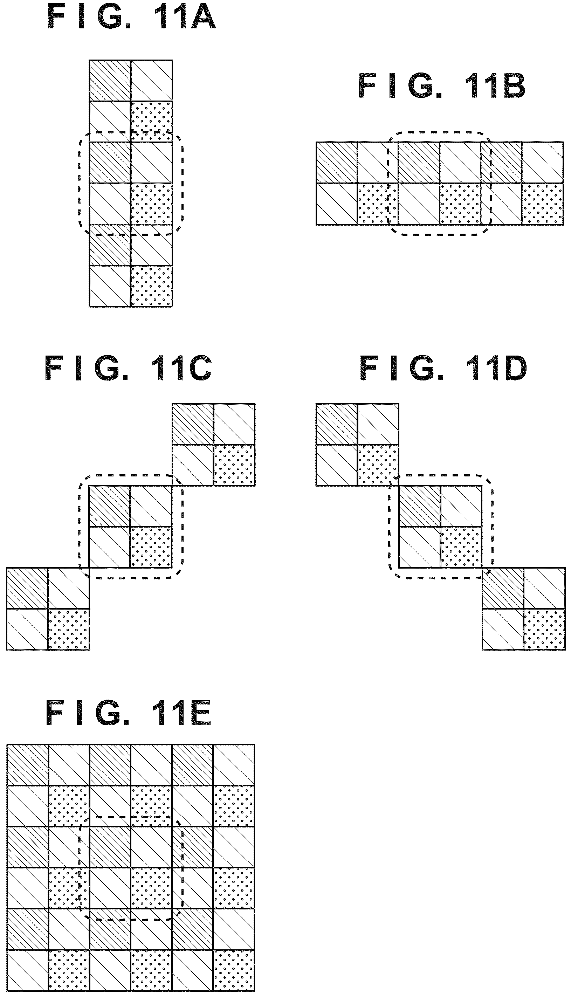

Here, the reference pixel range will be described with reference to FIGS. 11Ato 11E. In FIGS. 11A, 11B, 11C, 11D, and 11E in FIGS. 11A to 11E, 1 Bayer range surrounded by a dotted line indicates a pixel range of interest, and a range not surrounded by a dotted line indicates a reference pixel range to be adopted by the CPU 703 in step S200. The CPU 703 compares the pixel value in the pixel range of interest with each of the pixel values in the reference pixel range in the vertical direction illustrated in FIG. 11A, the reference pixel range in the horizontal direction illustrated in FIG. 11B, the reference pixel range in the diagonally right direction illustrated in FIG. 11C, and the reference pixel range in the diagonally left direction illustrated in FIG. 11D. Then, the reference pixel range having a value that most closely approximates that of the pixel range of interest is determined. In a case where none of FIGS. 11A, 11B, 11C, and 11D, is approximated, the range illustrated in FIG. 11E is determined as the reference pixel range.

In step S201, the CPU 703 determines whether or not it is a dynamic range expansion mode for executing the dynamic range expansion composition processing. In a case of the dynamic range expansion mode, the process proceeds to step S202. In a case of not the dynamic range expansion mode, the process proceeds to step S217.

In step S202, the CPU 703 determines the reference pixel range determined in step S200. In a case where the reference pixel range determined in step S200 is the vertical direction illustrated in FIG. 11A, the process proceeds to step S203. In a case where the reference pixel range is other than the vertical direction illustrated in FIG. 11A, the process proceeds to step S205.

In step S203, the CPU 703 executes processing up to the calculation of the composition ratio of the dynamic range expansion composition processing described above.

In step S204, the CPU 703 changes the composition ratio of the pixel range of interest and the composition ratio of the reference pixel range calculated in step S203 to the mean value of the composition ratio of the pixel range of interest and the composition ratio of the reference pixel range illustrated in FIG. 11A. Here, the mean value is calculated to change the composition ratios to an identical value, but the composition ratio may be calculated using a two-dimensional filter depending on the position, and a rapid change in the composition ratio between adjacent Bayer units may be suppressed.

In step S205, the CPU 703 determines the reference pixel range determined in step S200. In a case where the reference pixel range determined in step S200 is the horizontal direction illustrated in FIG. 11B, the process proceeds to step S206. In a case where the reference pixel range is other than the horizontal direction illustrated in FIG. 11B, the process proceeds to step S208.

In step S206, the CPU 703 executes processing up to the calculation of the composition ratio of the dynamic range expansion composition processing described above.

In step S207, the CPU 703 changes the composition ratio of the pixel range of interest and the composition ratio of the reference pixel range calculated in step S206 to the mean value of the composition ratio of the pixel range of interest and the composition ratio of the reference pixel range illustrated in FIG. 11B. Here, the mean value is calculated to change the composition ratios to an identical value, but the composition ratio may be calculated using a two-dimensional filter depending on the position, and a rapid change in the composition ratio between adjacent Bayer unis may be suppressed.

In step S208, the CPU 703 determines the reference pixel range determined in step S200. In a case where the reference pixel range determined in step S200 is the diagonally right direction illustrated in FIG. 11C, the process proceeds to step S209. In a case where the reference pixel range is other than the diagonally right direction illustrated in FIG. 11C, the process proceeds to step S211.

In step S209, the CPU 703 executes processing up to the calculation of the composition ratio of the dynamic range expansion composition processing described above.

In step S210, the CPU 703 changes the composition ratio of the pixel range of interest and the composition ratio of the reference pixel range calculated in step S209 to the mean value of the composition ratio of the pixel range of interest and the composition ratio of the reference pixel range illustrated in FIG. 11C. Here, the mean value is calculated to change the composition ratios to an identical value, but the composition ratio may be calculated using a two-dimensional filter depending on the position, and a rapid change in the composition ratio between adjacent Bayer units may be suppressed.

In step S211, the CPU 703 determines the reference pixel range determined in step S200. In a case where the reference pixel range determined in step S200 is the diagonally left direction illustrated in FIG. 11D, the process proceeds to step S212. In a case where the reference pixel range is other than the diagonally left direction illustrated in FIG. 11D, the process proceeds to step S214.

In step S212, the CPU 703 executes processing up to the calculation of the composition ratio of the dynamic range expansion composition processing described above.

In step S213, the CPU 703 changes the composition ratio of the pixel range of interest and the composition ratio of the reference pixel range calculated in step S212 to the mean value of the composition ratio of the pixel range of interest and the composition ratio of the reference pixel range illustrated in FIG. 11D. Here, the mean value has been calculated to change the composition ratios to an identical value, but the composition ratio may be calculated using a two-dimensional filter depending on the position, and a rapid change in the composition ratio between adjacent Bayer units may be suppressed.

In step S214, the CPU 703 executes processing up to the calculation of the composition ratio of the dynamic range expansion composition processing described above.

In step S215, the CPU 703 changes the composition ratio of the pixel range of interest and the composition ratio of the reference pixel range calculated in step S214 to the mean value of the composition ratio of the pixel range of interest and the composition ratio of the reference pixel range illustrated in FIG. 11E. Here, the mean value has been calculated to change the composition ratios to an identical value, but the composition ratio may be calculated using a two-dimensional filter depending on the position, and a rapid change in the composition ratio between adjacent Bayer units may be suppressed.

In step S216, the CPU 703 performs the dynamic range expansion composition processing on the pixel range of interest and the reference pixel range using the composition ratio changed in any of steps S204, S207, S210, S213, and S215.

In step S217, the CPU 703 performs the debayer processing on the pixel signals in the pixel range of interest with reference to the pixel signals in the reference pixel range determined in step S200.

According to the operation of the flowcharts of FIGS. 10A and 10B, in a case of performing the debayer processing of comparing the pixel values of the peripheral pixels, determining the pixel position with high relevance, and changing the reference pixel range, it is possible to reduce an error in the debayer processing result by changing the composition ratio in accordance with the reference pixel range of the debayer processing circuit.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An image capturing apparatus comprising:
an image sensor including a plurality of pixels arrayed in a matrix;
composition processing means for causing each pixel of the image sensor to perform first image capturing with a first exposure time and second image capturing with a second exposure time different from the first exposure time, and performing composition processing of composing a first image signal obtained in the first image capturing and a second image signal obtained in the second image capturing; and
image processing means for performing debayer processing on a composite image signal composed by the composition processing means,
wherein the composition processing ,it acquires a first composition ratio, which is a composition ratio of the first image signal and the second image signal in a pixel range of interest among the plurality of pixels, and a second composition ratio, which is a composition ratio of the first image signal and the second image signal in a reference pixel range to be referred to in a case of performing the debayer processing of the pixel range of interest, further acquires a third composition ratio, which is intermediate between the first composition ratio and the second composition ratio, from the first composition ratio and the second composition ratio, and performs composition of the first image signal and the second image signal in the pixel range of interest and the reference pixel range based on the third composition ratio, and
the image processing means for performing the debayer processing on an image signal in the pixel range of interest composed based on the third composition ratio with reference to an image signal in the reference pixel range composed based on the third composition ratio.

2. The image capturing apparatus according to claim 1, wherein the third composition ratio is a mean value of the first composition ratio and the second composition ratio.

3. The image capturing apparatus according to claim 1, wherein the third composition ratio is obtained by composing the first composition ratio and the second composition ratio using a two-dimensional filter depending on a position of a reference pixel with respect to the pixel range of interest.

4. The image capturing apparatus according to claim 1, wherein the composition processing means changes the reference pixel range based on a pixel position with high relevance to the pixel range of interest.

5. The image capturing apparatus according to claim 1, wherein the pixel range of interest has, as a minimum unit, a plurality of pixels having different filter sensitivities to colors.

6. The image capturing apparatus according to claim 5, wherein the minimum unit is 1 Bayer range of a Bayer array.

7. The image capturing apparatus according to claim 1, wherein the image sensor includes at least one charge holding portion for one photoelectric conversion portion, and can accumulate charges by a global shutter.

8. The image capturing apparatus according to claim 1, wherein the image sensor includes at least two charge holding portions for one photoelectric conversion portion, and can perform image capturing with different exposure times with a same pixel.

9. A control method for an image capturing apparatus including an image sensor including a plurality of pixels arrayed in a matrix, the control method comprising:
causing each pixel of the image sensor to perform first image capturing with a first exposure time and second image capturing with a second exposure time different from the first exposure time, and performing composition processing of composing a first image signal obtained in the first image capturing and a second image signal obtained in the second image capturing; and
performing debayer processing on a composite image signal composed in the composition processing,
wherein in the composition processing, a first composition ratio, which is a composition ratio of the first image signal and the second image signal in a pixel range of interest among the plurality of pixels, and a second composition ratio, which is a composition ratio of the first image signal and the second image signal in a reference pixel range to be referred to in a case of performing the debayer processing of the pixel range of interest, are acquired, a third composition ratio, which is intermediate between the first composition ratio and the second composition ratio, is further acquired from the first composition ratio and the second composition ratio, and composition of the first image signal and the second image signal in the pixel range of interest and the reference pixel range is performed based on the third composition ratio, and
in an image processing, the debayer processing is performed on an image signal in the pixel range of interest composed based on the third composition ratio with reference to an image signal in the reference pixel range composed based on the third composition ratio.

10. A program for causing a computer to execute each step of the control method for an image capturing apparatus according to claim 9.

11. A computer-readable storage medium storing a program for causing a computer to execute each step of the control method for an image capturing apparatus according to claim 9.
